# EUROPÄISCHE PATENTANMELDUNG

(11) **EP 1 821 077 A1**
(43) Veröffentlichungstag der Anmeldung: **22.08.2007**
(21) Anmeldenummer: 06110193.7
(22) Anmeldetag: 21.02.2006
(51) Int. Cl.: G01F 11/02

(54) **Volumenmess- und Dosiereinrichtung**

(71) Anmelder: METROHM AG, 9100 Herisau (CH)
(72) Erfinder: Kirschenbühler, Peter, 9100 Herisau (CH); Christensen, Björn, 9000 St Gallen (CH)
(74) Vertreter: Hepp, Dieter

(57) **Zusammenfassung**

Die Erfindung betrifft eine Volumenmess- und/oder Dosiereinrichtung (2) mit einem Zylinder-Kolben- und Hahnsystem (4) zum definierten Ansaugen und/oder Abgeben von Flüssigkeiten, wobei der Kolben (12) zum Ansaugen oder Abgeben der Flüssigkeit relativ zum Zylinder (10) bewegbar ist. Der Zylinder (10) ist zusammen mit dem Zylinderboden (11) um eine zur Zylinder-Längsachse parallele Drehachse verdrehbar gegenüber dem Hahnsystem gelagert. Der Zylinderboden (11) liegt mit Dichtsitz an einem Hahnelement (28) des Hahnsystems an, wobei das Hahnelement (28) wenigstens einer Kanalöffnung (29, 30, 31, 41) aufweist. Diese Öffnungen sind derart angeordnet, dass die wenigstens eine Öffnung (32) im Zylinderboden (11) beim Verdrehen des Zylinders (10) und des Zylinderbodens (11) mit den Öffnungen des Hahnelements (28) zur Deckung bringbar ist. Weiter sind Mittel (40) zum gleichzeitigen Verschliessen aller Öffnungen (32) des Zylinderbodens (11) vorgesehen.

## Beschreibung

Die vorliegende Erfindung betrifft eine Volumenmess- und/oder Dosiereinrichtung für Flüssigkeiten sowie ein Verfahren zum Betrieb einer Volumenmess- und/oder Dosiereinrichtung gemäss dem Oberbegriff der unabhängigen Patentansprüche.

Eine Volumenmess- und Dosiereinrichtung ist aus EP 399 497 bekannt. Die Einrichtung weist ein Zylinder-Kolben- und Hahn-System auf. Damit kann Flüssigkeit definiert angesaugt oder abgegeben werden. Das Hahnsystem umfasst ein Hahnelement mit wenigstens zwei Kanälen, die mit einer Öffnung im Zylinderboden verbindbar sind. Je nach Wahl der Öffnung kann Flüssigkeit aus unterschiedlichen Behältern angesaugt oder in unterschiedliche Behälter abgegeben werden.

Die oben beschriebene Volumenmess- und Dosiereinrichtung hat einige Nachteile. Zum Beispiel kann das Dosiergut im Zylinder kontaminieren, indem Wasser, Sauerstoff, Kohlendioxid etc. durch einen Dosierweg aus der Umgebung in den Zylinder diffundieren. Weiter kann der hydrostatische Druck, der an jeder Position des Hahnelements auftritt, zur Belastung des Zylinder-Kolben-Systems führen und die Dosiergenauigkeit negativ beeinflussen.

Aufgabe der vorliegenden Erfindung ist daher, die Nachteile des bekannten zu überwinden und insbesondere eine Vorrichtung zu schaffen, bei welcher die Dosiergenauigkeit beibehalten werden kann und das Dosiergut möglichst kontaminationsfrei bleibt.

Diese Aufgabe wird mit einer Volumenmess- und/oder Dosiereinrichtung und einem Verfahren zum Betrieb einer Volumenmess- und/oder Dosiereinrichtung gemäss dem kennzeichnenden Teil der unabhängigen Patentansprüche gelöst.

Die Volumenmess- und/oder Dosiereinrichtung weist ein Zylinder-Kolben- und Hahnsystem zum definierten Ansaugen und/oder Abgeben von Flüssigkeiten auf, wobei der Kolben zum Ansaugen oder Abgeben der Flüssigkeit relativ zum Zylinder bewegbar ist. Der Zylinder ist zusammen mit dem Zylinderboden um eine zur Zylinder-Längsachse parallele Drehachse verdrehbar gegenüber dem Hahnsystem gelagert. Der Zylinderboden liegt mit Dichtsitz an einem Hahnelement des Hahnsystems an, wobei das Hahnsystem wenigstens eine Kanalöffnung aufweist. Diese Öffnungen sind derart angeordnet, dass die wenigstens eine Öffnung im Zylinderboden beim Verdrehen des Zylinders und des Zylinderbodens mit der oder den Öffnungen des Hahnelements zur Deckung bringbar ist. Erfindungsgemäss sind Mittel zum gleichzeitigen Verschliessen aller Öffnungen des Zylinderbodens vorgesehen.

Durch das Verschliessen aller Öffnungen des Zylinderbodens können keine Fremdstoffe ins Dosiergut diffundieren. Kontamination des Dosierguts ist somit stark eingeschränkt. Ausserdem bleibt auch der Hydrostatische Druck stabil, wenn der Zylinderinhalt von der Aussenumgebung abgeschlossen ist. Somit wirken keine zusätzlichen Kräfte auf den Kolben, und die Messgenauigkeit bleibt erhalten. Weiter können mehrere Komponenten in den Zylinder eingesaugt werden, welche dann in ein chemisches oder physikalisches Gleichgewicht kommen müssen. Wenn alle Öffnungen des Zylinderbodens verschlossen sind, können Umwelteinflüsse auf das Gemisch vermieden werden. Das Gemisch kommt somit ungestört ins Gleichgewicht.

Bevorzugt bestehen der Zylinderboden und das Hahnelement aus Keramik. Andere Materialien wie Glas oder Kunststoff sind aber ebenfall denkbar.

In einer besonders bevorzugten Ausführungsform sind in mindestens einer vorgegebenen einstellbaren Position des Hahnsystems alle Öffnungen des Zylinderbodens durch das Hahnelement verschlossen. Diese mindestens eine einstellbare Position wird im weiteren als Schliessposition bezeichnet. Je nach Beschaffenheit und Material des Zylinderbodens und des Hahnelements ist es sinnvoll, wenn das Hahnelement in der Schliessposition zusätzliche Dichtmittel zum Abdichten jeder Öffnung des Zylinderbodens aufweist.

Besonders vorteilhaft an dieser Ausführungsform ist, dass der Schliessmechanismus an sich keine zusätzlichen Elemente benötigt, welche das Totvolumen der Einrichtung vergrössern würden. Ausserdem ist die Handhabung der Einrichtung sehr simpel, da keine zusätzlichen Elemente angesteuert werden müssen. Das Totvolumen ist bei dieser Ausführungsform also fast null.

Vorzugsweise ist eine Steueranordnung zum gesteuerten Einstellen der Positionen des Hahnelements vorgesehen. Die Steueranordnung ist derart ausgebildet, dass mit einem Steuerbefehl in Abhängigkeit des Befehls eine Schliessposition oder eine andere vorbestimmte Position des Hahnelements einstellbar ist. Besonders vorteilhaft weist die Einrichtung weiter eine Messanordnung zum Bestimmen der mindestens einen Schliessposition des Hahnelements auf. Die Messanordnung kann beispielsweise ein Hallsensor sein, mit welchem überprüft wird, ob sich das Hahnelement in der Schliessposition befindet. Besonders vorteilhaft weist jede bestimmungsgemäss einnehmbare Position des Hahnelements einen eigenen Hallsensor auf.

In einer weiteren Ausführungsform sind die Öffnungen asymetrisch im Hahnelement angeordnet. Es hat sich insbesondere als vorteilhaft erwiesen, wenn um die Schliesspositionen ein grösserer Abstand im Hahnelement realisiert wird als zwischen den einzelnen Kanälen. Somit ist mit grösserer Sicherheit gewährleistet, dass das Hahnelement die Öffnungen im Zylinderboden zuverlässig verschliesst.

In einer alternativen Ausführungsform ist zum Verschliessen der wenigstens einen Öffnung im Zylinderboden ein separates Ventil vorgesehen. Besonders vorteilhaft ist das Ventil im Zylinderboden direkt eingelassen, so dass möglichst wenig Totvolumen generiert wird.

Weiter umfasst die vorliegende Erfindung ein Verfahren zum Betrieb einer Volumen- und/oder Dosiereinrichtung mit einem Zylinder-, Kolben- und Hahnsystem zum definierten Ansaugen und/oder Abgeben von Flüssigkeiten. Der Kolben zum Ansaugen oder Abgeben der Flüssigkeit wird relativ zum Zylinder bewegt. Der Zylinder ist zusammen mit dem Zylinderboden um eine zur Zylinder-Längsachse parallele Drehachse verdrehbar gegenüber dem Hahnsystem gelagert. Der Zylinderboden liegt mit Dichtsitz an einem Hahnelement des Hahnsystems mit wenigstens einer Kanalöffnung an. Eine Öffnung ist z. B. denkbar, wenn eine Flüssigkeit von einem Gefäss in ein anderes pipettiert werden soll.

In einem ersten Schritt des Verfahrens wird entschieden, in welche Position das Hahnsystem gebracht werden soll, d.h. ob Flüssigkeit angesaugt oder abgegeben oder der Zylinder verschlossen werden soll. In einem weiteren Schritt wird in Abhängigkeit der Entscheidung das Hahnsystem derart in eine vorgegebene einstellbare Position gebracht, dass entweder zum Ansaugen oder Abgeben der Flüssigkeiten die wenigstens eine Öffnung im Zylinderboden mit den Öffnungen des Hahnelements zur Deckung gebracht wird, oder dass alle Öffnungen des Zylinderbodens verschlossen werden.

Besonders vorteilhaft wird in einer ersten Ausführungsform der Erfindung das Hahnelement zum gleichzeitigen Verschliessen aller Öffnungen des Zylinderbodens mit allen Öffnungen des Zylinderbodens in eine dichtende Schliessposition gebracht. Alternativ können in einer zweiten Ausführungsform zum Verschliessen aller Öffnungen des Zylinderbodens auch Ventile in den Öffnungen des Zylinderbodens angesteuert werden.

Besonders vorteilhaft wird das Hahnsystem mittels einer Steueranordnung gesteuert in die vorgegebene einstellbare Position gebracht. Es ist aber auch denkbar, das Hahnsystem manuell in die gewünschte Position zu bringen.

Vorzugsweise wird weiter mittels einer Messanordnung die Position des Hahnelement überprüft. Die Messanordnung kann beispielsweise aus je einem Hallsensor für jede der einstellbaren Positionen bestehen, so dass ein gesteuerter Betrieb möglich ist.

Bevorzugte Ausführungsformen der Erfindung werden im Folgenden anhand von Zeichnungen erläutert. Es zeigt:
- Fig. 1:: Eine schematische Darstellung einer Volumenmess- und Dosiereinrichtung mit den Merkmalen der Erfindung im Schnitt,
- Fig. 2:: eine Draufsicht auf die Betätigungsvorrichtung und das Zylinder-Kolben-Hahn-System in Richtung der Pfeile A-A bzw. B-B in Figur 1,
- Fig. 3:: einen Schnitt nächst der Linie C-C bzw. D-D in Figur 1, und
- Fig. 4:: eine alternative Einrichtung im Schnitt nächst der Linie C-C bzw. D-D in Figur 1.

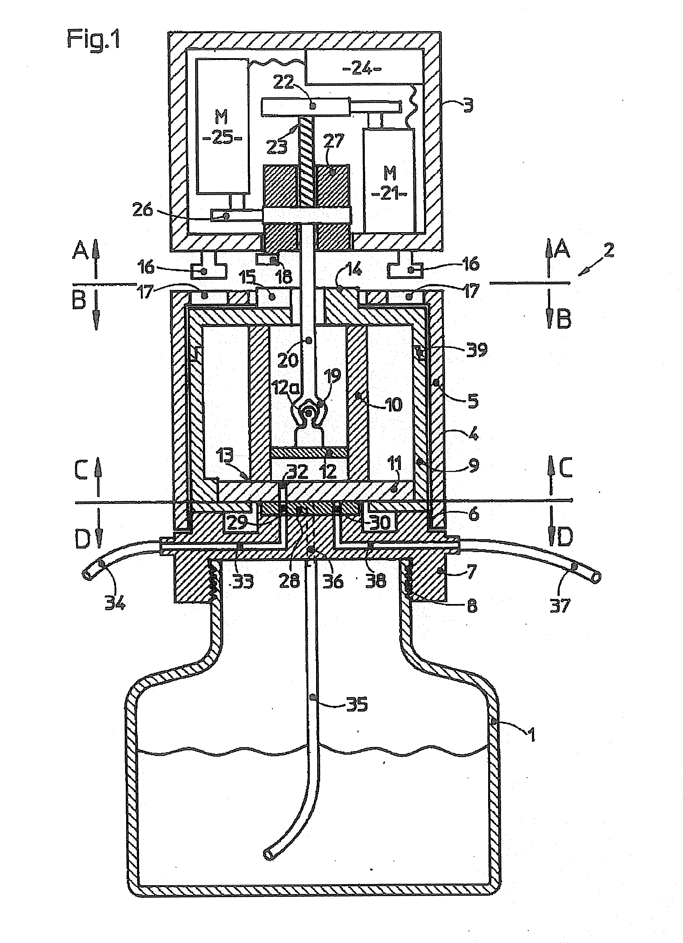

Gemäss Fig. 1 ist auf einem Behälter 1 eine Volumenmess- und Dosiereinrichtung 2 aufgeschraubt, welche aus einer Betätigungseinrichtung 3 und einem Zylinder-Kolben- und Hahnsystem 4 besteht. Das System 4 weist ein zylindrisches Gehäuse 5 auf, welches über einen Bajonettverschluss 6 (oder auch über eine Gewindeverbindung) mit einem zylindrischen Aufsetzteil 7 verbunden ist. Das Aufsetzteil 7 ist mittels eines Innengewindes 8 - ggf. mit Zwischenring - auf den Behälter 1 aufgeschraubt. Im Gehäuse 5 ist eine zylindrische Befestigungseinrichtung 9 drehbar gelagert. Das Gehäuse 5 hält einen Zylinder 10 und einen Zylinderboden 11 unter Kraftschluss derart zusammen, dass beim Verschieben eines Kolbens 12 keine Flüssigkeit im Dichtbereich 13 zwischen Zylinderboden 11 und Zylinder 10 austritt.

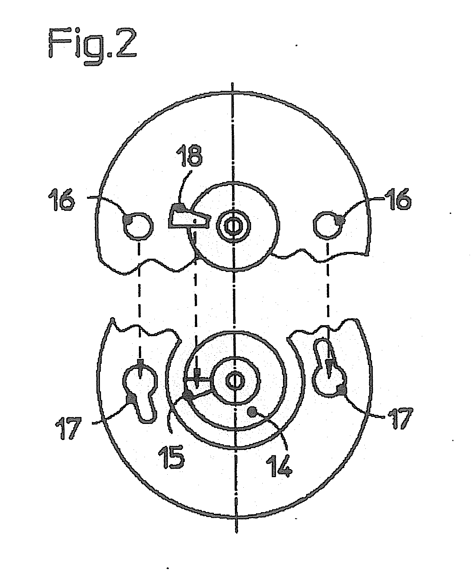

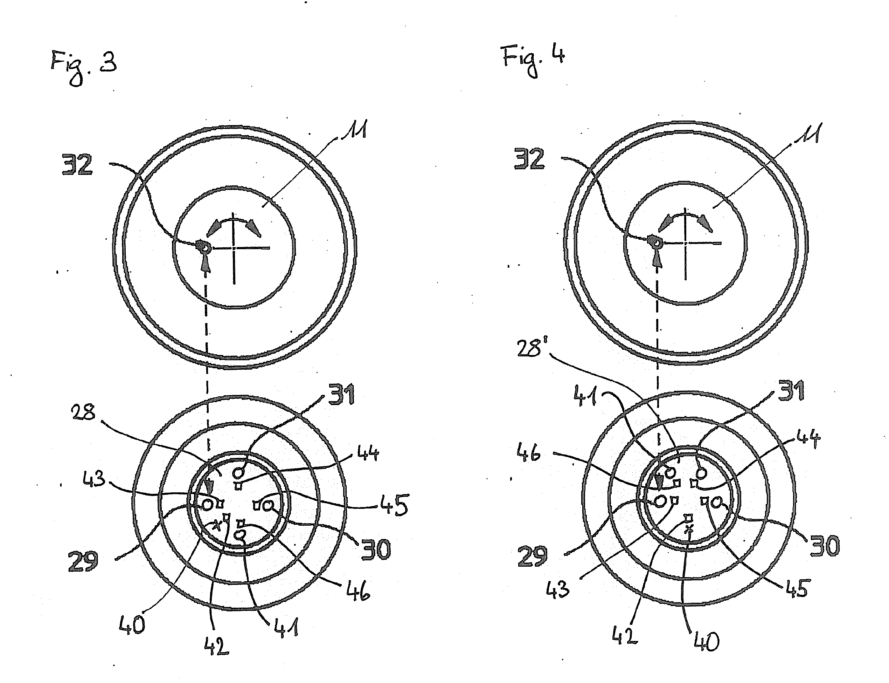

Die Befestigungseinrichtung 9 ist an ihrer Oberseite mit einem Vorsprung 14 versehen, der eine Nut 15 (Fig. 2) aufweist.

In Fig. 1 und 2 sind Betätigungseinrichtung 3 und Zylinder-Kolben-Hahn-System 4 zum Zwecke der Darstellung getrennt dargestellt. Im Betrieb wird die Betätigungseinrichtung 3 mittels Bolzen 16, die in Langlöcher 17 eingreifen mit dem System 4 formschlüssig verbunden. Dabei gelangt ein Mitnehmer 18 so weit in die Nut 15, dass sich eine formschlüssige Drehverbindung ergibt. Gleichzeitig greift ein Kupplungselement 19 über eine Kupplungskugel 12a, so dass der Kolben 12 mit der Antriebswelle 20 verbunden wird. Sobald diese Verbindung hergestellt ist, kann der Kolben 12 durch einen Motor 21 in der Betätigungseinrichtung 3 angehoben oder abgesenkt werden. Zu diesem Zweck ist der Motor 21 über ein Getriebe 22 mit der Antriebswelle 20 verbunden. Das Getriebe 22 umgreift mittels eines Gewindes die mit einem Aussengewinde 23 versehene Antriebswelle 20, so dass durch den Gewindeeingriff die drehfest gelagerte Antriebswelle 20 angehoben oder abgesenkt werden kann.

Der Motor 21 wird über eine automatische Steueranordnung 24 versorgt, so dass der Hubweg des Kolbens 12 mit dem zu fördernden Volumen koordiniert wird. Die Steueranordnung 24 kann dabei in bekannter Weise durch eine interne oder externe Bedienungseinrichtung, z.B. auch einen Mikroprozessor gesteuert werden. In der Betätigungseinrichtung 3 ist ein zweiter Motor 25 vorgesehen, welcher mittels eines Zahnrads 26 eine zylindrische Hülse 27 antreibt, auf welcher der Mitnehmer 18 einstückig befestigt ist. Sobald sich die Hülse 27 verdreht, wird diese Drehbewegung über Mitnehmer 18 und Nut 15 auf die Befestigungseinrichtung 9 und damit auf den Zylinder 10 und den Zylinderboden 11 übertragen.

Der Zylinderboden wird mit Dichtsitz vom Gehäuse 5 gegen ein Hahnelement 28 gepresst. Im Hahnelement 28 befinden sich Kanalöffnungen 29, 30, 31 und 41 (Fig. 3), welche je nach Drehstellung des Zylinder-Bodens 11 abwechselnd mit einer Öffnung 32 im Zylinderboden 11 zur Deckung gebracht werden. Wenn der Zylinder 10 verschlossen werden soll, wird der Zylinderboden 11 in Bezug auf das Hahnelement 28 in eine Schliessposition gebracht. In der Schliessposition befindet sich eine Schliessstelle 40 in Deckung mit der Öffnung 32 des Zylinderbodens 11. Bei diesem Hahnelement 28 sind die Öffnungen 29, 30, 31 und 41 symmetrisch um den Mittelpunkt des Hahnelements 28 angeordnet. Die Schliessstelle 40 befindet sich zwischen den Öffnungen 29 und 41.

Jeder Öffnung 29, 30, 31 und 41 sowie der Schliessstelle 40 ist je ein Hallsensor 42, 43, 44, 45 und 46 zugeordnet. Die Hallsensoren 42, 43, 44, 45 und 46 stehen in Wirkverbindung mit der Steueranordnung 24. Immer wenn eine neue Position des Hahnelements 28 eingestellt wird, überprüft die Steueranordnung 24 mittels der Signale der Hallsensoren 42, 43, 44, 45 und 46, ob die Position korrekt eingenommen wurde. Sobald sich das Hahnelement 28 relativ zum Zylinderboden 11 in der korrekten Position befindet, wird der Motor 25 gestoppt. Somit wird sichergestellt, dass in der Schliessposition die Öffnung 32 des Zylinderbodens 11 dichtend geschossen ist, während in den anderen Positionen die Öffnungen 29, 30, 31 und 41 exakt mit der Öffnung 32 des Zylinderbodens 11 zur Deckung gebracht werden.

Wenn mehrere Schliesspositionen gewünscht sind, könnten mit zusätzlichen Hallsensoren zusätzliche Schliessstellen im Hahnelement 28 definiert werden.

Bei der Stellung gemäss Figur 1 kommuniziert der Kammerinhalt des Zylinders 10 über die Öffnung 32 im Zylinderboden 11 und die Öffnung 29 im Hahnelement 28 mit einem Kanal 33, welcher mit einem Schlauch 34 verbunden ist. Der Inhalt des Zylinders 10 kann deshalb durch den Schlauch 34 ausgestossen werden.

Soll z.B. in einem nächsten Arbeitsschritt Flüssigkeit aus dem Behälter 1 über einen Schlauch 35 in den Zylinder 10 eingesaugt werden, wird der Motor 25 betätigt, welcher über Zahnrad 26, Hülse 27, Mitnehmer 18, Nut 15 und Befestigungseinrichtung 9 den Zylinder 10 und den Zylinderboden 11 derart um die Längsachse verdreht, dass die Öffnung 32 im Zylinderboden 11 mit der Öffnung 31 im Hahnelement 28 fluchtet. In dieser Drehstellung kommuniziert das Innere des Zylinders 10 über einen Kanal 36 mit dem Schlauch 35. Durch Betätigung des Motors 21 und Anheben des Kolbens 12 mittels Antriebswelle 20 kann Flüssigkeit aus dem Behälter 1 aufgesaugt werden. Sofern anschliessend die in den Zylinder 10 aufgenommene Flüssigkeit über einen Schlauch 37 abgegeben werden soll, muss lediglich mittels Motor 25 in der bereits beschriebenen Weise die Befestigungseinrichtung 9 verdreht und dadurch die Öffnung 32 mit der Öffnung 30 zur Deckung gebracht werden, so dass der Zylinder mit einem Kanal 38 kommuniziert, der mit dem Schlauch 37 verbunden ist.

Wenn der Zylinderinhalt zwischenzeitlich von der Umwelt abgetrennt werden soll, wird das Hahnelement 28 relativ zum Zylinderboden 11 in die Schliessposition gebracht, so dass die Schliessstelle 40 in Deckung mit der Öffnung 32 des Zylinderbodens ist. So kann beispielsweise eine Reaktion im Zylinder 10 unbeeinflusst von äussern Einflüssen stattfinden.

Um die Befestigungseinrichtung 9 im Gehäuse 5 verdrehbar zu lagern, ist wenigstens die Befestigungseinrichtung 9 aus einem gleitfähigen Material (Kunststoff) hergestellt. Die Befestigungseinrichtung 9 ist dabei zweiteilig ausgebildet und an einer Verbindungsstelle 39 trennbar, so dass Zylinder 10 und Kolben 12 leicht zugänglich sind. Dementsprechend kann, z.B. zu Reinigungszwecken die Gesamtanordnung leicht geöffnet werden. Zylinderboden 11 und Zylinder 10 können aus geschliffenem Keramikmaterial hergestellt sein.. Der Zylinder 10 kann auch aus Glas oder aus geeignetem Kunststoffmaterial gefertigt sein.

In Figur 4 ist ein alternatives Hahnelement 28' im Schnitt nächst der Linie C-C bzw. D-D aus Figur 1 dargestellt. Wie aus Figur 4 ersichtlich ist, ist der Zylinderboden 11 identisch mit jenem aus Fig. 1. Im Hahnelement 28' sind jedoch die Öffnungen 29, 30, 31 und 41 asymetrisch und der Schliessstelle 40 gegenüberliegend angeordnet. Jeder Öffnung 29, 30, 31 und 41 sowie der Schliessstelle 40 ist wiederum ein Hallsensor 42, 43, 44, 45 und 46 zugeordnet, mit welchem die korrekte Position des Hahnelements 28' überprüft wird. Die asymetrische Anordnung im Hahnelement 28' hat den Vorteil, dass für die Schliessstelle 40 genügend Platz zur Verfügung steht. Dadurch ist die Dichtfunktion des Hahnelements 28' verbessert.

Selbstverständlich sind die in den Ausführungsbeispielen gezeigten Anordnungen nicht darauf beschränkt, dass sich im Zylinderboden nur eine einzige Öffnung 32 befindet. Es bleibt dem Fachmann überlassen, wie viele derartige Öffnungen er entsprechend dem Anwendungsfall im Zylinderboden 11 bzw. im Hahnelement 28 vorsehen will. Aufgrund der scheibenförmigen Anordnung lassen sich dabei optimal einfach und mit geringstem Aufwand auch komplizierte Hahnanordnungen mit einer grossen Anzahl von kommunizierenden Öffnungen bzw. Kanälen sowie unterschiedlich vielen Schliessstellen verwirklichen. Der Hahn besteht dabei im Prinzip nur aus dem Hahnelement 28 und dem Zylinderboden 11. Beide sind einfach zugänglich, einfach zu reinigen und auch austauschbar.

## Patentansprüche

1. Volumenmess- und/oder Dosiereinrichtung (2) mit einem Zylinder-Kolben- und Hahnsystem (4) zum definierten Ansaugen und/oder Abgeben von Flüssigkeiten, wobei ein Kolben (12) zum Ansaugen oder Abgeben der Flüssigkeit relativ zu einem Zylinder (10) bewegbar ist, der Zylinder (10) zusammen mit dem Zylinderboden (11) um eine zur Zylinder-Längsachse parallele Drehachse verdrehbar gegenüber dem Hahnsystem gelagert ist, der Zylinderboden (11) mit Dichtsitz an einem Hahnelement (28) des Hahnsystems mit wenigstens einer Kanalöffnung (29, 30, 31 41) anliegt, und wobei diese Öffnungen (29, 30, 31, 41) derart angeordnet sind, dass die wenigstens eine Öffnung (32) im Zylinderboden beim Verdrehen des Zylinders (10) und des Zylinderbodens (11) abwechselnd mit der oder den den Öffnungen (29, 30, 31, 41) des Hahnelements (28) zur Deckung bringbar ist, **dadurch gekennzeichnet, dass** Mittel (40) zum gleichzeitigen Verschliessen aller Öffnungen (32) des Zylinderbodens (11) vorgesehen sind.

2. Einrichtung nach Anspruch 1, **dadurch gekennzeichnet, dass** in mindestens einer vorgegebenen einstellbaren Schliessposition des Hahnsystems alle Öffnungen (32) des Zylinderbodens (11) durch das Hahnelement (28) verschlossen sind.

3. Einrichtung nach Anspruch 2, **dadurch gekennzeichnet, dass** eine Steueranordnung (24) zum gesteuerten Einstellen der Positionen des Hahnelements (28) vorgesehen ist.

4. Einrichtung nach einem der Ansprüche 2 oder 3, **dadurch gekennzeichnet, dass** eine Messanordnung (42) zum Bestimmen der mindestens einen Schliessposition des Hahnelements (28) vorhanden ist, so dass ein gesteuerter Betrieb der Einrichtung möglich ist.

5. Einrichtung nach Anspruch einem der Ansprüche 1 bis 4, **dadurch gekennzeichnet, dass** die Öffnungen (29, 30, 31, 41) asymetrisch im Hahnelement (28) angeordnet sind.

6. Einrichtung nach Anspruch 1, **dadurch gekennzeichnet, dass** zum Verschliessen der wenigstens einen Öffnung (32) im Zylinderboden (11) ein Ventil vorgesehen ist.

7. Verfahren zum Betrieb einer Volumenmess- und/oder Dosiereinrichtung mit einem Zylinder-, Kolben- und Hahnsystem (4) zum definierten Ansaugen und/oder Abgeben von Flüssigkeiten, wobei der Kolben (12) zum Ansaugen oder Abgeben der Flüssigkeit relativ zum Zylinder (10) bewegt wird, der Zylinder (10) zusammen mit dem Zylinderboden (11) um eine zur Zylinder-Längsachse parallele Drehachse verdrehbar gegenüber dem Hahnsystem gelagert ist und der Zylinderboden (11) mit Dichtsitz an einem Hahnelement (28) des Hahnsystems mit wenigstens einer Kanalöffnung (29, 30, 31, 41) anliegt,
**dadurch gekennzeichnet, dass** das Hahnsystem derart in vorgegebene einstellbare Positionen gebracht wird, so dass wahlweise zum Ansaugen oder Abgeben der Flüssigkeiten die wenigstens eine Öffnung (32) im Zylinderboden mit den Öffnungen (29, 30, 31, 41) des Hahnelements zur Deckung gebracht wird, oder dass die wenigstens eine Öffnung (32) im Zylinderbodens verschlossen wird.

8. Verfahren nach Anspruch 8, **dadurch gekennzeichnet, dass** das Hahnelement (28) zum gleichzeitigen Verschliessen aller Öffnungen (32) des Zylinderbodens (11) mit allen Öffnungen (32) des Zylinderbodens (11) in eine dichtende Schliessposition gebracht wird.

9. Verfahren nach Anspruch 7 oder 8, **dadurch gekennzeichnet, dass** das Hahnsystem mittels einer Steueranordnung (24) automatisiert in die vorgegebene einstellbare Position gebracht wird.

10. Verfahren nach einem der Ansprüche 7 bis 9, **dadurch gekennzeichnet, dass** mittels einer Messanordnung (42) die Position des Hahnelements (28) überprüft wird.
